Europäisches Patentamt

European Patent Office

Office européen des brevets

(11) Veröffentlichungsnummer: **0 101 931**
**A1**

(12) # EUROPÄISCHE PATENTANMELDUNG

(21) Anmeldenummer: 83107323.4

(22) Anmeldetag: 26.07.83

(51) Int. Cl.³: **F 27 B 9/24**
F 27 B 9/30, F 27 D 3/00
F 27 D 23/00

(30) Priorität: 13.08.82 DE 3230115

(43) Veröffentlichungstag der Anmeldung:
07.03.84 Patentblatt 84/10

(84) Benannte Vertragsstaaten:
AT BE CH DE FR GB IT LI NL SE

(71) Anmelder: Ruhrgas Aktiengesellschaft
Huttropstrasse 60 Postfach 10 32 52
D-4300 Essen 1(DE)

(72) Erfinder: Kühn, Friedhelm, Dr.
Fichtestrasse 108
D-4330 Mülheim(DE)

(74) Vertreter: Zenz, Joachim Klaus et al,
Am Ruhrstein 1
D-4300 Essen 1(DE)

(54) Verfahren zum Auswechseln der Rollen eines Durchlauf-Rollenherdofens sowie Ofen zum Durchführen des Verfahrens.

(57) Offenbart wird ein Verfahren zum Auswechseln der Rollen eines Durchlauf-Rollenherdofens bei laufendem Betrieb, wobei die arbeitende Rolle (4) aus ihrer Arbeitsposition nach unten verschwenkt wird, während man gleichzeitig die nächste, bereits angetriebene Rolle (4) nach oben in die Arbeitsposition hineinschwenkt. Offenbart wird ferner eine zugehörige Vorrichtung, bei der jeweils vier Rollen (4) in einander gegenüberliegenden drehbaren Tellern (3) gelagert sind und von einem zentralen, auf einem der Teller angeordneten Antrieb (7) in Drehung versetzt werden. Durch Verdrehen eines Tellerpaares wandert die oberste Rolle aus der Arbeitsposition heraus und gibt diese Position für die nächstfolgende Rolle frei. Die ausgetauschte Rolle kann sodann demontiert und durch eine neue Rolle ersetzt werden.

Fig. 1

EP 0 101 931 A1

Verfahren zum Auswechseln der Rollen eines Durchlauf-
Rollenherdofens sowie Ofen zum Durchführen des Verfahrens

Die Erfindung betrifft ein Verfahren zum Auswechseln der
Rollen eines Durchlauf-Rollenherdofens bei laufendem Betrieb, sowie einen Durchlauf-Rollenherdofen mit auswechselbaren Rollen.

Derartige Industrieöfen werden vor allem zur kontinuierlichen Wärmebehandlung von Blechbahnen oder -bändern eingesetzt. Dabei ist man bestrebt, den Ofen so lange wie
möglich ohne Stillstand zu betreiben. Dies gilt auch für
den Fall, daß Bleche unterschiedlicher Qualität nacheinander behandelt werden sollen. Die Blechbahnen werden
aneinander geheftet, so daß keine Unterbrechung in der
Ofenbeschickung auftritt.

Allerdings müssen für jede Blechqualität und Oberflächengüte angepaßte Rollen eingesetzt werden. Im Betrieb treten an den Rollen Fehler durch Verschleiß und örtliche
Ablagerungen auf. Dies führt dann zu Beschädigungen der
behandelten Blechbahn. Es wird also relativ häufig ein
Auswechseln der Rollen erforderlich. Oft tauscht man
verschleißanfällige Rollen auch vorsichtshalber schon
sehr früh aus, da die hohen Durchlaufgeschwindigkeiten
als Folge von Rollenfehlern in kurzer Zeit erhebliche
Mengen an Ausschuß ergeben.

In jüngster Zeit wurden einige Verfahren entwickelt, die
das Auswechseln der Rollen bei laufendem Betrieb, also
bei durchlaufender Blechbahn (im folgenden auch "Band"
genannt), ermöglichen.

Im Deutschen Patent 30 04 805 ist ein Verfahren beschrieben, bei dem die auszuwechselnde Rolle abgesenkt oder aber die beiden Nachbarrollen angehoben werden, so daß während des Auswechselns keine Bandberührung stattfindet. Hierzu müssen die Rollen in senkrechten Schlitzen der Ofenseitenwände bewegbar sein. Es ergeben sich also Abdichtungsprobleme, insbesondere, wenn unter Schutzgas gearbeitet wird. Auch muß die Blechbahn während des Rollenwechsels eine erhöhte Stufe oder eine Senke in ihrem Wege überwinden. Wenn dies problemlos möglich sein soll, muß die Bandgeschwindigkeit vermindert werden.

Der Erfindung liegt die Aufgabe zugrunde, ein Verfahren der eingangs genannten Art zu schaffen, das in einfacher Weise einen störungsfreien Rollenwechsel bei laufendem Betrieb ermöglicht.

Bei einem Verfahren zum Auswechseln der Rollen eines Durchlauf-Rollenherdofens bei laufendem Betrieb, wobei die Rollen, die parallele Drehachsen haben und in ihrer Arbeitsposition das durchlaufende Gut von unten abstützen, angetrieben werden, sieht die Erfindung zur Lösung dieser Aufgabe vor, daß jede Rolle zum Auswechseln um eine zur Rollendrehachse parallele und beabstandete Schwenkachse abwärts aus ihrer Arbeitsposition ausgeschwenkt und im wesentlichen gleichzeitig eine neue Rolle aufwärts in diese Arbeitsposition hineingeschwenkt wird und daß sowohl die auszuwechselnde Rolle als auch die neue Rolle bei ihrem Verschwenken angetrieben werden.

Die auszutauschende Rolle wird also praktisch augenblicklich durch die neue Rolle ersetzt. Dies kann geschehen, wenn ein Wechsel in der Bandqualität oder in der Oberflächengüte eine andersartige Rolle erforderlich macht, oder aber wenn die auszutauschende Rolle verschlissen ist.
Im erstgenannten Fall kann man später wieder auf die ursprüngliche Rolle umschalten, im letztgenannten Fall wird
die verschlissene Rolle nach deren Ausschwenken aus der
Arbeitsposition aus dem Ofen ausgebaut und durch eine
andere Rolle ersetzt.

Die beim Rollenwechsel angewendete Schwenkbewegung läßt
sich abdichtungsmäßig wesentlich einfacher beherrschen
als eine vertikale Translationsbewegung. Auch bedarf es
während des Rollenwechsels, der bei unverminderter Bandgeschwindigkeit durchgeführt wird, keiner zusätzlichen
Rollenführung.

Vorzugsweise werden die Rollen in Ofendurchlaufrichtung
verschwenkt, also gleichsinnig mit ihrer Eigendrehung.
Auf diese Weise entstehen keine Relativgeschwindigkeiten
entgegen der Bandlaufrichtung. Die ohnehin geringe Gefahr
von Bandbeschädigungen wird hierdurch weiter vermindert,
und zwar wird insbesondere dafür gesorgt, daß etwaige Beschädigungen nur auf einer sehr kurzen Blechbahn- oder
Bandlänge auftreten können.

Die Erfindung schafft ferner einen Durchlauf-Rollenherdofen, der sich ganz besonders gut zum Durchführen des
obigen Verfahrens eignet. Er weist eine Mehrzahl von bei
laufendem Betrieb auswechselbaren, an jeweils zwei gegenüberliegenden Ofenseitenwänden gelagerten Rollen auf. Die
Verbesserung dieses Ofens besteht erfindungsgemäß darin,
daß am Orte jeder auswechselbaren Rolle in jede Ofenseitenwand ein Drehteller eingesetzt ist, der um eine zur
Rollendrehachse parallele Achse drehbar ist und eine Mehrzahl von auf gleichem Radius zur Tellerachse liegenden
Lagerstellen zur Aufnahme der Rollen aufweist. Beim Rollenwechsel wird also lediglich das zugehörige Drehtellerpaar
oder Drehscheibenpaar in Bandlaufrichtung gedreht, ein Vorgang, der sich rasch und problemlos durchführen läßt.
Ggf. können die Teller mit Markierungen oder Rasten
versehen sein, um die korrekten Rollenstellungen zu
fixieren.

Die Anzahl der Lagerstellen, d.h. der pro Tellerpaar
einsetzbaren Rollen, wird so gewählt, daß das Band auch
beim Rollenwechsel ausreichend unterstützt wird. Unter
diesem Gesichtspunkt ist es besonders vorteilhaft, daß
jeder Teller vier gleichmäßig über dem Umfang verteilte
Lagerstellen aufweist. Bei dieser Konstruktion stehen
außerdem ausreichend viele Rollen zur Verfügung, um auf
die aus anderen Gründen unvermeidbaren Stillstandzeiten
des Ofens warten zu können, bis die verschlissenen Rollen
aus dem Ofen ausgebaut und ersetzt werden.

Man kann jedoch auch den Ausbau der gerade nicht im
Einsatz befindlichen Rollen während des Betriebes durchführen. Hierzu ist vorzugsweise jede Lagerstelle bei
nicht eingesetzter Rolle durch einen Strahlungsschutz
verschließbar. Dieser verhindert einen übermäßigen Wärmeaustritt, der sich negativ auf die gesamte Lageranordnung
auswirken könnte.

An wenigstens einer der beiden Ofenseitenwände ist jedem
Teller eine Montage-Lagerstelle zum Montieren und Demontieren der Rollen zugeordnet. Zur Trennung der Ofenatmosphäre von der Umgebung ist es vorteilhaft, daß jede
Montage-Lagerstelle eine außen auf den Teller aufgesetzte
Schleuse mit zwei in Achsrichtung beabstandeten, unabhängig voneinander betätigbaren Schiebern sowie mit Dichtungen aufweist. Will man eine neue Rolle einsetzen, so
öffnet man den ersten Schieber und führt die Rolle in
die zugehörige Dichtung ein. Sodann wird der zweite Schieber geöffnet, und man kann die Rolle bis in die Lagerstelle des an der gegenüberliegenden Ofenwand befindlichen Tellers bewegen. Während dieses Einschubvorganges
wird die Schleusenkammer über entsprechende Anschlüsse
gespült. Bei einem Rollenaustausch ist damit ein Eindringen von Sauerstoff in die Ofenatmosphäre unterbunden.

Bei dem erfindungsgemäßen Ofen genügt ein einseitiger
Rollenantrieb. Dabei ist es besonders vorteilhaft, daß
einer der Teller jedes Tellerpaares einen zentralen Antrieb für sämtliche zugehörigen Rollen aufweist. Mit
diesem Antrieb stehen die zugehörigen Rollen ständig in
Verbindung. Neu eingebaute Rollen werden sofort an den
Antrieb angekuppelt. Es kann sich dabei um einen Reibradantrieb handeln.

Vorteilhafter ist es jedoch, daß der zentrale Antrieb
als Zahnrad ausgebildet ist und daß jede Rolle ein entsprechendes, in Achsrichtung verschiebbares Zahnrad
trägt sowie eine Eingriffseinrichtung für einen Hilfsantrieb aufweist. Bei dieser Konstruktion wird eine neu eingebaute Rolle durch den dann angebrachten Hilfsantrieb
auf die erforderliche Drehzahl beschleunigt. Sodann verschiebt man das Zahnrad auf der Rolle, so daß es mit dem
zentralen Zahnrad in Eingriff gelangt. Die korrekte
Drehzahl der Rolle für diesen Eingriff läßt sich mit
optischen oder opto-elektrischen Mitteln bestimmen.

Die Abdichtung der Teller bereitet keine besonderen
Schwierigkeiten. Vorzugsweise ist jeder Teller durch
einen lösbaren Dichtflansch gegenüber der Ofenwand abgedichtet, wobei der Dichtflansch vor jeder Tellerdrehung
gelöst und nach der Tellerdrehung wieder festgemacht
wird.

Nach einem weiteren vorteilhaften Merkmal der Erfindung
sind sämtliche Teller mindestens einer Ofenwand an einen
gemeinsamen Verstellantrieb ankuppelbar. Auf Wunsch können also sämtliche Rollen über der Länge des Ofens
gleichzeitig ausgetauscht werden, jedoch ist auch ein
selektiver Austausch möglich.

Die Erfindung wird im folgenden anhand eines bevorzugten
Ausführungsbeispiels im Zusammenhang mit der Zeichnung
näher erläutert.   Die Zeichnung zeigt in:

Fig. 1     schematisch eine Seitenansicht eines Teils des
           erfindungsgemäßen Durchlauf-Rollenherdofens;
           und

Fig. 2     eine vergrößerte Teilschnittansicht entlang der
           Linie II-II in Fig. 1.

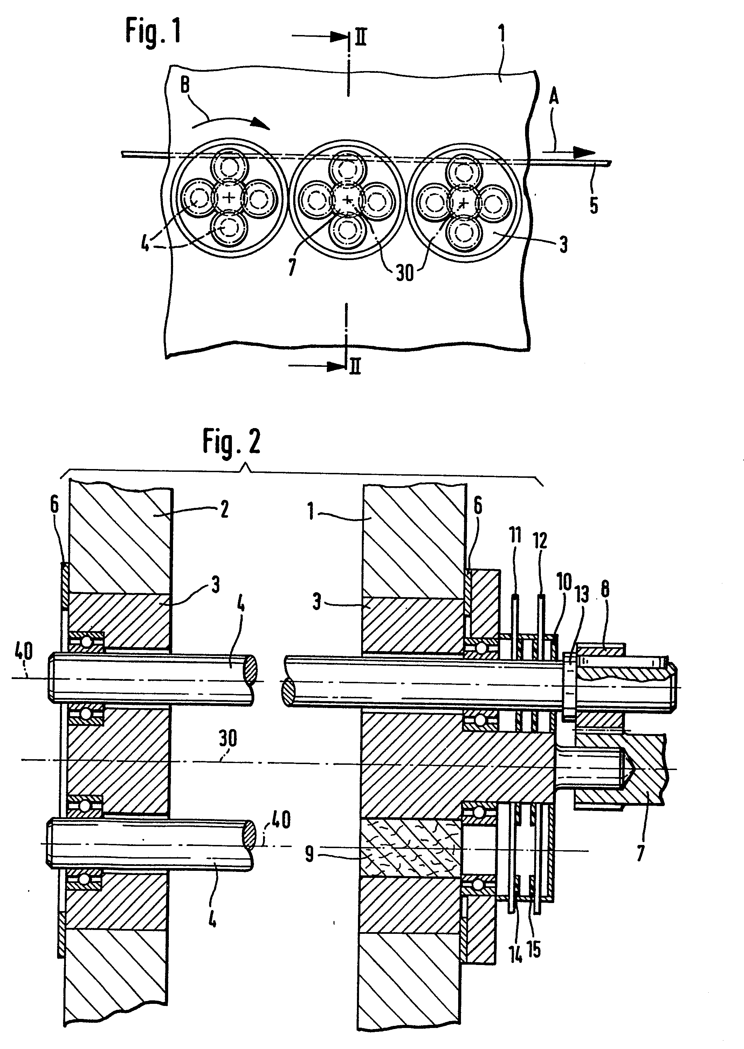

Der Rollenherdofen wird von Seitenwänden 1 und 2 begrenzt,
in denen einander gegenüberliegende, drehbare Teller bzw.
Drehscheiben 3 paarweise auf einer gemeinsamen Tellerachse 30 gelagert sind. Bei dem dargestellten Ausführungsbeispiel sind die Tellerachsen 30 aller Tellerpaare 3
des Ofens parallel zueinander und in einer gemeinsamen,
vorzugsweise horizontalen Ebene angeordnet. Jedes Tellerpaar kann vier Rollen 4 aufnehmen, von denen sich jeweils die oberste in der Arbeitsposition befindet. Die
in Arbeitsposition befindlichen Rollen aller Tellerpaare
stützen eine durchlaufende Blechbahn 5, die sich in Richtung des Pfeils A gemäß Fig. 1 bewegt. Soll ein Rollenwechsel stattfinden, so wird das zugehörige Paar von
Tellern 3 um die zugehörige Tellerachse 30 in Richtung
des Pfeils B gemäß Fig. 1 gedreht, und zwar soweit, daß
die nächstfolgende Rolle in die Arbeitsposition gelangt.
Vor der Drehung der Teller lockert man deren Dichtflansche
6 und zieht sie hinterher wieder fest. Nach dem Rollenwechsel kann die verbrauchte Rolle demontiert und durch
eine neue ersetzt werden.

- 7 -

0101931

Gemäß Fig. 2 trägt der rechte Teller 3 ein zur Tellerachse 30 koaxiales Zahnrad 7, welches den zentralen Antrieb für sämtliche zugehörigen Rollen 4 bildet. Hierfür
sind die Rollen jeweils mit einem Zahnrad 8 versehen.

Fig. 2 zeigt im rechten unteren Teil einen Stopfen 9,
wie er verwendet werden kann, um eine Lageröffnung bei
fehlender Rolle abzudichten. Ein anderer Strahlenschutz
ist gleichermaßen möglich.

Beim Ausbau einer verbrauchten und Einbau einer neuen
Rolle geht man folgendermaßen vor:

Zuerst wird das Zahnrad 8 entlang der Drehachse 40 der
zugehörigen Rolle 4 soweit verschoben, daß es den Eingriff mit dem Zahnrad 7 verläßt. Dadurch wird die Drehbewegung der zugehörigen Rolle unterbrochen. Sodann kann
man diese Rolle entlang ihrer Drehachse 40 nach rechts
aus dem Ofen herausziehen. In die Lageröffnung des linken
Tellers 3 wird sofort ein Strahlenschutz z. B. ein Stopfen
9 eingesetzt. Während des Herausziehens der Rolle 4 entlang ihrer Drehachse 40 passiert das linke Rollenende
eine Schleuse 10, deren linker Schieber 11 verschlossen
wird, bevor das Rollenende den rechten Schieber 12 freigegeben hat. Am Orte der Schieber sind Dichtungen 14 und
15 vorgesehen, die eine Abdichtung gegenüber der Rolle
bewirken.

Das Einsetzen der neuen Rolle geht in umgekehrter Reihenfolge vor sich. Der linke Schieber 11 der Schleuse 10
wird erst dann geöffnet, wenn das linke Rollenende den
rechten Schieber 12 passiert hat und die Schleuse geflutet worden ist. Handelt es sich um Rollen mit verjüngtem Ende, so ist der Abstand zwischen den Schiebern derart gewählt, daß die Dichtung 15 bereits am vollen Rollenumfang anliegt, bevor der Schieber 11 geöffnet wird. Nach dem vollständigen Einstecken der Rolle wird ein Hilfsantrieb angesetzt, der an einem Bund 13 angreift und die Rolle auf diejenige Drehzahl beschleunigt, die erforderlich ist, um das Zahnrad 8 nach links in den Eingriff mit dem Zahnrad 7 zu verschieben. Die Überwachung der Drehzahl kann beispielsweise durch eine nicht dargestellte optische oder opto-elektrische Einrichtung erfolgen.

Die Einleitung des Antriebes in das Zahnrad 7 kann beliebig erfolgen. Beispielsweise kann ein gemeinsamer Antrieb für sämtliche Rollen des Ofens vorgesehen sein.

Das Drehen der jeweiligen Paare von Tellern 3 um deren Tellerachsen 30 läßt sich ohne weiteres manuell durchführen. Es kann jedoch auch ein nicht gezeigter Verstellantrieb vorhanden sein. Auch hier besteht die Möglichkeit, einen für sämtliche Tellerpaare gemeinsamen Verstellantrieb vorzusehen, jedoch sollten dann Kupplungsmöglichkeiten vorhanden sein, um einen individuellen Rollenwechsel zu ermöglichen.

Abweichend von der Darstellung in Fig. 2 kann die Anordnung auch so getroffen werden, daß die Rollen von der gegenüberliegenden Seite des Ofens aus montiert und demontiert werden.

- 1 -

0101931

<u>Ansprüche</u>

1. Verfahren zum Auswechseln der Rollen eines Durchlauf-Rollenherdofens bei laufendem Betrieb, wobei die Rollen, die parallele Drehachsen haben und in ihrer Arbeitsposition das durchlaufende Gut von unten abstützen, angetrieben werden,
d a d u r c h   g e k e n n z e i c h n e t  ,
daß jedeRolle zum Auswechseln um eine zur Rollendrehachse parallele und beabstandete Schwenkachse abwärts aus ihrer Arbeitsposition ausgeschwenkt und im wesentlichen gleichzeitig eine neue Rolle aufwärts in diese Arbeitsposition hineingeschwenkt wird und
daß sowohl die auszuwechselnde Rolle als auch die neue Rolle bei ihrem Verschwenken angetrieben werden.

2. Verfahren nach Anspruch 1, dadurch gekennzeichnet, daß die Rollen beim Ausschwenken aus bzw. beim Einschwenken in die Arbeitsposition eine Schwenkbewegungskomponente in Ofendurchlaufrichtung erhalten.

3. Durchlauf-Rollenherdofen mit einer Mehrzahl von bei laufendem Betrieb auswechselbaren, jeweils an zwei gegenüberliegenden Ofenseitenwänden gelagerten Rollen, dadurch gekennzeichnet, daß am Orte jeder auswechselbaren Rolle in jede Ofenseitenwand (1, 2) ein Drehteller (3) eingesetzt ist, der um eine zur Rollendrehachse (40) parallele Achse (30) drehbar ist und eine Mehrzahl von auf gleichem Radius um die Tellerachse liegenden Lagerstellen zur Aufnahme der Rollen (4) aufweist.

4. Ofen nach Anspruch 3, dadurch gekennzeichnet, daß jeder Teller (3) vier gleichmäßig über den Umfang verteilte Lagerstellen aufweist.

5. Ofen nach Anspruch 3 oder 4, dadurch gekennzeichnet, daß jede Lagerstelle bei nicht eingesetzter Rolle durch einen Strahlenschutz (9) verschließbar ist.

6. Ofen nach einem der Ansprüche 3 bis 5, dadurch gekennzeichnet, daß an wenigstens einer der beiden Ofenseitenwände (1, 2) jedem Teller (3) eine Montage-Lagerstelle zum Montieren und Demontieren der Rollen zugeordnet ist, die eine außen auf den Teller (3) aufgesetzte Schleuse (10) mit zwei in Achsrichtung beabstandeten, unabhängig voneinder betätigbaren Schiebern (11, 12) sowie mit Dichtungen (14, 15) aufweist.

7. Ofen nach Anspruch 6, dadurch gekennzeichnet, daß die Schleusen (10) Anschlüsse zur Spülung aufweisen.

8. Ofen nach einem der Ansprüche 3 bis 7, dadurch gekennzeichnet, daß einer der Teller (3) jedes Tellerpaares einen zentralen Antrieb (7) für sämtliche zugehörigen Rollen (4) aufweist.

9. Ofen nach Anspruch 8, dadurch gekennzeichnet, daß der zentrale Antrieb als Zahnrad (7) ausgebildet ist und daß jede Rolle (4) ein entsprechendes, in Achsrichtung verschiebbares Zahnrad (8) trägt sowie eine Eingriffseinrichtung (13) für einen Hilfsantrieb aufweist.

10. Ofen nach einem der Ansprüche 3 bis 9, dadurch gekennzeichnet, daß jeder Teller (3) durch einen vor jeder Tellerdrehung lösbaren Dichtflansch (6) gegenüber der Ofenwand abgedichtet ist.

11. Ofen nach einem der Ansprüche 3 bis 10, dadurch gekennzeichnet, daß sämtliche Teller (3) mindestens einer Ofenseitenwand (1, 2) an einen gemeinsamen Verstellantrieb ankuppelbar sind.

Fig. 1

Fig. 2

### Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 506 372  (R.D. MacDONALD) | | F 27 B   9/24<br>F 27 B   9/30<br>F 27 D   3/00<br>F 27 D  23/00 |
| | --- | | |
| A | FR-A-2 480 717  (FERDINAND KROBATH MASCHINENFABRIK) | | |
| | --- | | |
| A | US-A-3 978 974  (J.D. MORRISSEY) | | |
| | --- | | |
| A | EP-A-0 033 828  (SUNDWIGER EISENHÜTTE MASCHINENFABRIK GRAH) | | |
| | --- | | |
| A | EP-A-0 033 845  (SUNDWIGER EISENHÜTTE MASCHINENFABRIK GRAH) | | RECHERCHIERTE SACHGEBIETE (Int. Cl. ³) |
| | --- | | |
| A | FR-A-1 112 561  (GALLET & CIE.) | | F 27 B<br>F 27 D |
| | ----- | | |

Der vorliegende Recherchenbericht wurde für alle Patentansprüche erstellt.

| Recherchenort<br>DEN HAAG | Abschlußdatum der Recherche<br>15-11-1983 | Prüfer<br>COULOMB J.C. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82